# EUROPÄISCHE PATENTSCHRIFT

(11) **EP 3 272 565 B1**
(45) Veröffentlichungstag und Bekanntmachung des Hinweises auf die Patenterteilung: **17.04.2019**
(21) Anmeldenummer: 17000916.1
(22) Anmeldetag: 31.05.2017
(51) Int. Cl.: B60K 11/08, F01P 7/10

(54) **KÜHLERJALOUSIE**
RADIATOR BLIND
RIDEAU DE RADIATEUR

(30) Priorität: 20.07.2016 CH 9352016
(43) Veröffentlichungstag der Anmeldung: 24.01.2018
(73) Patentinhaber: Kunststoff Schwanden AG, 8762 Schwanden (CH)
(72) Erfinder: Chöpf, Johann, D-82490 Farchant (DE); Ackermann, Saimen, CH-8753 Mollis (CH)
(74) Vertreter: Quehl, Horst Max

(56) Entgegenhaltungen:
- EP-A2- 1 074 419
- DE-A1-102013 007 158
- DE-A1-102014 106 605
- DE-A1-102014 108 575

## Beschreibung

Die Erfindung betrifft eine Jalousie für die Anordnung vor dem Kühler eines Kraftfahrzeuges, mit zueinander parallelen, linearen Lamellen, die in einem gemeinsamen Jalousierahmen mittels endseitig an ihnen vorgesehenen Lagerzapfen schwenkbar gelagert sind und die in einem einen Schwenkhebel bildenden Abstand von ihren Lagerzapfen einen Kurbelzapfen aufweisen, wobei die Lamellen mit ihren Lagerzapfen und Kurbelzapfen einstückig in Kunststoffspritztechnik geformt sind, die Kurbelzapfen der Lamellen, in eine gemeinsame Stellschiene eingreifend, miteinander gekoppelt sind und einer der Lagerzapfen gleichachsig mit der Antriebswelle eines Stellantriebes verbunden ist.

Derartige Jalousien sind z.B. für die frontseitige Montage an einem Kraftfahrzeugbestimmt, so dass sie in geschlossener Position den cw-Wert des Fahrzeuges verbessern und dessen Motor schneller seine Betriebstemperatur erreicht.

Eine gattungsgemäße Kühlerjalousie ist bekannt durch die DE102013007158. Durch die relativ zum Stellantrieb beidseitige Anordnung der Lamellen, haben diese eine geringe Länge und folglich gute Formsteifigkeit. Die beidseitige Lamellenanordnung führt jedoch zu einer entsprechend grossen Anzahl von Lamellen, verbunden mit dem Aufwand für die Herstellung zwei verschiedener, d.h. für die rechts- und linksseitige Montage ausgeführter Lamellen. Ausserdem ist das Einführen ihrer endseitig äusseren Lamellenachsen in Lagerlöcher des Jalousierahmens und das Einhaken der endseitig inneren Lamellenachsen in nach unten abgewinkelte Lagerausnehmungen mit entsprechend grossem Montageaufwand verbunden.

Der Erfindung liegt die Aufgabe zugrunde eine Kühlerjalousie der eingangs genannten Art zu finden, deren Einzelteile sich in Kunststoffspritztechnik einfach herstellen lassen und die mit geringem maschinellem Aufwand zu einer Jalousie mit hoher Funktionssicherheit zusammenfügbar sind.

Die Lösung dieser Aufgabe erfolgt erfindungsgemäss aufgrund der kennzeichnenden Merkmale des Patentanspruchs 1.

Vorteilhafte Ausgestaltungen der Erfindung sind Gegenstand der abhängigen Patentansprüche und der folgenden Beschreibung anhand eines zeichnerisch dargestellten Ausführungsbeispieles zu entnehmen.

Es zeigt, jeweils in perspektivischer Darstellung :

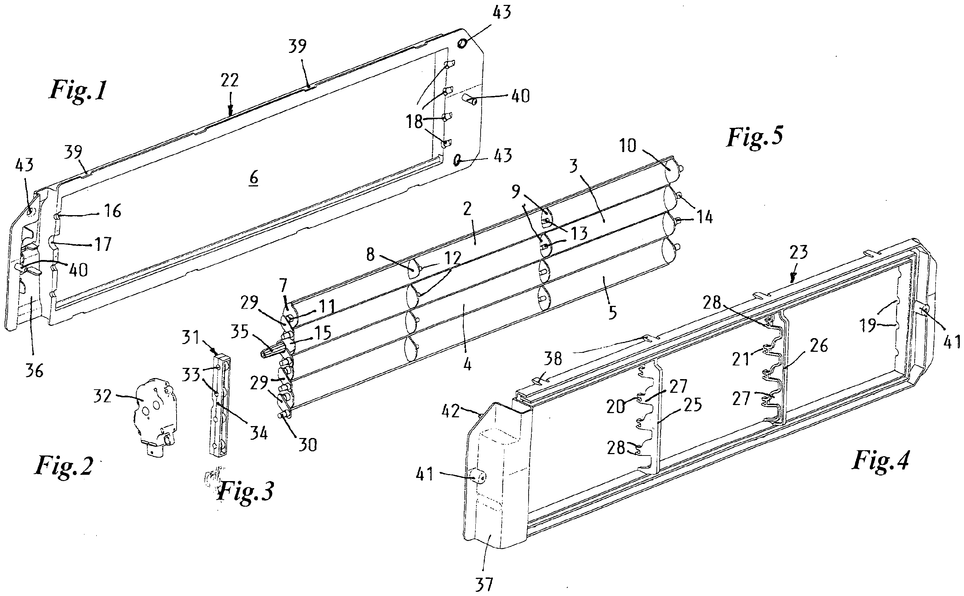

Fig. 1 einen Vorderrahmen der Jalousie,
Fig. 2 einen für die Lamellen der Jalousie bestimmten Stellantriebes,
Fig. 3 eine Stellschiene,
Fig. 4 einen Hinterrahmen der Jalousie,
Fig. 5 eine Anordnung von Lamellen vor ihrer Einfügung zwischen dem Vorder- und Hinterrahmen der Jalousie,
Fig. 6 eine Vorderansicht der Jalousie bei geöffneter Position ihrer Lamellen und
Fig. 7 die Jalousie nach Fig. 6 bei geschlossener Position ihrer Lamellen

Die für die Anordnung in einem Karosserieausschnitt einer Fahrzeugfront bestimmte Jalousie 1 ist in ihrer Form und ihren Abmessungen vom Design des jeweiligen Fahrzeuges mitbestimmt.

Die Jalousie 1 des dargestellten Ausführungsbeispieles ist schmal und breit, so dass z.B. vier übereinander angeordnete, relativ schmale Lamellen 2 bis 5 ausreichend sind, um die Jalousieöffnung 6 zu schliessen.

Eine schmale Ausführung der einzelnen Lamellen 2 bis 5 hat den Vorteil, dass die Jalousie 1 in Richtung der Luftströmung entsprechend flach ausgeführt ist und somit zum frontseitigen Einbau in ein Kraftfahrzeug eine nur geringe Raumtiefe beansprucht.

Um den Lamellen 2 bis 5 eine ausreichende Formsteifigkeit zu geben, ist ihr Querschnitt sichelförmig, mit ihrer konvexen Seite nach vorn gekrümmt, und an ihren Enden und vorzugsweise auch im Bereich zwischen ihren Enden sind sie ausserdem durch scheibenförmige Versteifungsrippen bildende Querwände 7 bis 10 verstärkt.

Die Querwände 7 bis 10 der Lamellen 2 bis 5 dienen auch der Aufnahme von an ihnen in Kunststoffspritztechnik angeformten Lagerzapfen 11 bis 15, über die sie in endseitigen Lagerschalen 16 bis 19 und mittelseitigen Achsaufnahmen 20, 21 eines Vorderrahmens 22 und eines Hinterrahmens 23 des Jalousierahmens 24 schwenkbar gelagert sind.

Der Hinterrahmen 23 des Jalousierahmens 24 ist durch z.B. zwei Querstege 25, 26 verstärkt. An diesen ist für jede Lamelle 2 bis 5 ein in Richtung zum Vorderrahmen 6 bzw. entgegen der Durchströmungsrichtung der Jalousie abstehender Achsträger 27 mit endseitigen Aufnahmeklauen 28 vorgesehen, in welche die Lagerzapfen 12, 13 einrastbar sind.

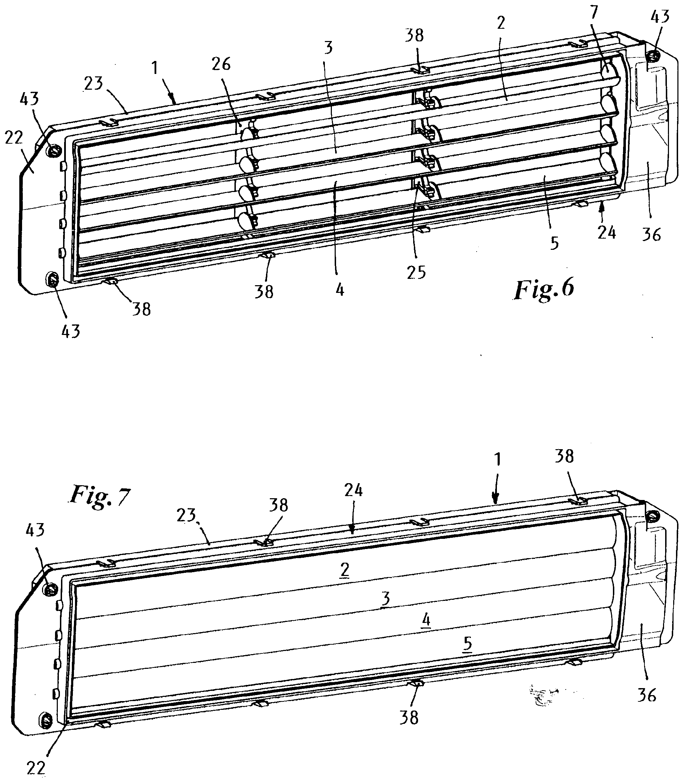

Zum gemeinsamen Verschwenken der der Lamellen 2 bis 5 um ihre Lagerzapfen 11 bis 15 zwischen einer geöffneten Position entsprechend der Darstellung in Fig. 6 und einer geschlossenen Position nach Fig. 7 ist an einem endseitigen Lagerzapfen 11, 15 jeder Lamelle 2 bis 5 ein Schwenkhebel 29 mit einem Kurbelzapfen 30 vorgesehen. Diese Kurbelzapfen 30 befinden sich im Eingriff mit einer gemeinsamen Stellschiene 31, so dass die Drehbewegung einer durch einen Stellantrieb 32 bewegten Lamelle 3 auf die anderen Lamellen 2, 4 und 5 übertragen wird.

Zur einfachen Herstellung von Lagerausnehmungen 33 der Stellschiene 31 ist diese entlang ihrer Mittelebene 34 geteilt hergestellt und anschliessend zusammengefügt, so dass ihre halbschalenförmigen Lagerausnehmungen gemeinsam ein Zapfenlager bilden.

Die durch den Stellantrieb 32 bewegte Lamelle 3 hat gleichachsig zu ihrem Lagerzapfen 15 einen eine Eingriffsprofilierung aufweisenden Wellenzapfen 35 auf den der eine dazu passende Hohlwelle aufweisende Stellantrieb 32 aufschiebbar ist.

Nachdem die Lamellen 2 bis 5 auf diese Weise durch die Stellschiene 31 zusammengehalten sind, lassen sie sich zusammen mit dem seitlich aufgeschobenen Stellantrieb 32 in den Vorderrahmen 22 einfügen, so dass ihre Lagerzapfen 11 bis 15 zum Eingriff in deren Lagerschalen 16 bis 18 gelangen. Die seitliche Stellschiene 31 und des Stellantrieb 32 finden dabei Aufnahme in einer seitlichen Gehäuseausnehmung 36 des Vorderrahmens 22.

Eine dazu passende Gehäuseausnehmung 37 ist auch in dem Hinterrahmen 23 vorgesehen, so dass nach Anfügen des Hinterrahmens 23 an den Vorderrahmen 22 der Stellantrieb 32 mit der Stellschiene 31 einen vollständigen Gehäuseeinschluss finden. Gleichzeitig gelangen die endseitigen Lagerschalen 19 und die Aufnahmeklauen 28 der Querstege 25, 26 des Hinterrahmens 23 in Eingriff mit den Lagerzapfen 12 bis 14 der Lamellen 2 bis 5, so dass diese mit geringem Montageaufwand ihre Endposition im Jalousierahmen 24 finden.

Für die gegenseitige Verrastung des Vorderrahmens 22 mit dem Hinterrahmen 23 sind z.B. am Hinterrahmen 23 Federzungen 38 vorgesehen, die in dazu passende Rastausnehmungen 39 des Vorderrahmens 22 einrasten. Ausserdem ist der Hinterrahmen 23 seitlich durch zwei nichtdargestellte Schrauben am Vorderrahmen 22 befestigt, die in eine aus einem Zapfen 40 und einer Zapfenaufnahme 41 bestehende Zapfenverbindung eingreifen. Ausserdem sind am Hinterrahmen 23 Positionierungsstifte 42 vorgesehen, die in zugehörige Stiftaufnahmen 43 des Vorderrahmens 22 eingreifen.

Sämtlichen Teilen der Jalousie 1 ist somit gemeinsam, dass sie sich in einfach gestalteten, zweiteiligen Kunststoffspritzformen einteilig herstellen lassen und durch einfach automatisch ausführbare Hubbewegungen zusammenfügen lassen.

### Bezugszeichenliste

- 1: Jalousie
- 2 - 5: Lamelle
- 6: Jalousieöffnung
- 7 - 10: Querwände
- 11 - 15: Lagerzapfen
- 16 - 19: Lagerschalen
- 20, 21: Achsaufnahmen
- 22: Vorderrahmen
- 23: Hinterrahmen
- 24: Jalousierahmen
- 25, 26: Querstege
- 27: Achsträger
- 28: Aufnahmeklauen
- 29: Schwenkhebel
- 30: Kurbelzapfen
- 31: Stellschiene
- 32: Stellantrieb
- 33: Lagerausnehmung
- 34: Mittelebene
- 35: Wellenzapfen
- 36, 37: Gehäuseausnehmungen
- 38: Federzungen
- 39: Rastausnehmungen
- 40: Zapfen
- 41: Zapfenaufnahme
- 42: Positionierungsstifte
- 43: Stiftaufnahmen

## Patentansprüche

1. Jalousie für die Anordnung vor dem Kühler eines Kraftfahrzeuges, mit zueinander parallelen, linearen Lamellen (2 - 5), die in einem gemeinsamen Jalousierahmen (24) mittels endseitig an ihnen vorgesehenen Lagerzapfen (11 - 15) schwenkbar gelagert sind und die in einem einen Schwenkhebel (29) bildenden Abstand von ihren Lagerzapfen (11- 15) einen Kurbelzapfen (30) aufweisen, wobei die Lamellen (2 - 5) mit ihren Lagerzapfen (11 - 15) und Kurbelzapfen (30) einstückig in Kunststoffspritztechnik geformt sind, die Kurbelzapfen (30) der Lamellen (2 - 5), in eine gemeinsame Stellschiene (31) eingreifend, miteinander gekoppelt sind und einer der Lagerzapfen (35) gleichachsig den Wellenzapfen (35) eines Stellantriebes (32) bildet, **dadurch gekennzeichnet, dass** der Jalousierahmen (24) aus einem Vorderrahmen (22) und einem Hinterrahmen (23) besteht, in denen für die gemeinsame Aufnahme der Lagerzapfen (11- 15) jeweils Lagerschalen (16 - 19) bildende Ausnehmungen vorgesehen sind und diese Rahmenteile (22, 23) gemeinsam eine den Stellantrieb (32) und die Stellschiene (31) einschliessende Kammer (36, 37) begrenzen.

2. Jalousie nach Anspruch 1, **dadurch gekennzeichnet, dass** die Stellschiene (31) aus zwei entlang einer Mittelebene (34) miteinander verbundenen Schienenteilen mit Lagerschalen bildenden Ausnehmungen (33) besteht, in denen die Kurbelzapfen (30) eingeschlossen sind.

3. Jalousie nach Anspruch 1, **dadurch gekennzeichnet, dass** die den Stellantrieb einschliessende Kammer (36, 37) an einem der Endbereiche der Lamellen (2 - 5) vorgesehen ist.

4. Jalousie nach einem der Ansprüche 1 bis 3, **dadurch gekennzeichnet, dass** Lagerzapfen (12, 13) an Versteifungsrippen bildenden Querwänden (7 - 10) der Lamellen (2 - 5) vorgesehen sind.

5. Jalousie nach Anspruch 3 und 4, **dadurch gekennzeichnet, dass** jede Lamelle (2 - 5) im Bereich zwischen ihren endseitigen Querwänden (7, 10) mindestens eine weitere, einen Lagerzapfen (12, 13) aufweisende Querwand (8, 9) aufweist und dieser somit zusätzliche Lagerzapfen (12, 13) in einer Aufnahmeklaue (28) eingerastet ist, die in einem Quersteg (25, 26) einer der Rahmenteile (23) des Jalousierahmens (24) vorgesehen ist.

6. Jalousie nach einem der Ansprüche 1 bis 5, **dadurch gekennzeichnet, dass** der Querschnitt der Lamellen (2 - 5) sichelförmig gekrümmt ist.

## Claims

1. Shutter for arrangement in front of the radiator of a motor vehicle, having linear slats (2-5) parallel to one another, said slats (2-5) being pivotably mounted in a mutual shutter frame (24) by means of bearing pins (11-15) provided at the ends thereof, the slats (2-5) having a crank pin (30) at a distance from their bearing pins (11-15) and forming a pivot lever (29), wherein the slats (2-5) are moulded integrally using plastic injection technology with their bearing pins (11-15) and crank pins (30), the crank pins (30) of the slats (2-5), engaging with a mutual adjustment rail (31), are coupled to one another, and one of the bearing pins (35) forms the shaft pin (35) of an actuator (32) on the same axle, **characterised in that** the shutter frame (24) consists of a front frame (22) and a rear frame (23), in which recesses respectively forming bearing shells (16-19) are provided for the mutual holding of the bearing pins (11-15), and these frame parts (22, 23) together border a chamber (36, 37) enclosing the actuator (32) and the adjustment rail (31).

2. Shutter according to claim 1, **characterised in that** the adjustment rail (31) consists of two rail parts having recesses (33) that form bearing shells and are connected to each other along a central plane (34), in which recesses (33) the crank pins (30) are enclosed.

3. Shutter according to claim 1, **characterised in that** the chamber (36, 37) enclosing the actuator is provided at one of the end regions of the slats (2-5).

4. Shutter according to one of claims 1 to 3, **characterised in that** bearing pins (12, 13) are provided on transverse walls (7-10) of the slats (2-5), said walls (7-10) forming reinforcement ribs.

5. Shutter according to claim 3 and 4, **characterised in that** each slat (2-5) has, in the region between its end transverse walls (7, 10), at least one further transverse wall (8, 9) having a bearing pin (12, 13), and this thereby engages additional bearing pins (12, 13) with a receiving claw (28) that is provided in a transverse web (25, 26) of one of the frame parts (23) of the shutter frame (24).

6. Shutter according to one of claims 1 to 5, **characterised in that** the cross-section of the slats (2-5) is curved in the shape of a sickle.

## Revendications

1. Volet destiné à un agencement devant le radiateur d'un véhicule à moteur, doté de lamelles (2 à 5) linéaires, parallèles les unes aux autres, qui sont logées en pouvant pivoter dans un cadre de volet (24) commun au moyen de goupilles de support (11 à 15) prévues sur celles-ci à leurs extrémités et qui présentent un maneton (30) à une distance par rapport aux goupilles de support (11 à 15) constituant un levier de pivotement (29), les lamelles (2 à 5) étant conçues d'un seul tenant avec leurs goupilles de support (11 à 15) et leurs manetons (30) par une technique de moulage par injection de matière plastique, les manetons (30) des lamelles (2 à 5), étant en prise dans un rail de réglage (31) commun, étant couplés les uns aux autres et une des goupilles de support (35) formant sur le même axe le tourillon d'arbre (35) d'un actionneur (32), **caractérisé en ce que** le cadre de volet (24) est constitué d'un cadre avant (22) et d'un cadre arrière (23), dans lesquels des cavités formant des coques de logement (16 à 19) respectives pour le logement en commun des goupilles de support (11 à 15) sont prévues et délimitent ces parties de cadre (22, 23) ensemble dans une chambre (36, 37) incluant l'actionneur (32) et le rail de réglage (31).

2. Volet selon la revendication 1, **caractérisé en ce que** le rail de réglage (31) est constitué de deux parties de rail reliées ensemble le long d'un plan central (34) et dotées de cavités (33) formant les coques de logement dans lesquelles les manetons (30) sont compris.

3. Volet selon la revendication 1, **caractérisé en ce que** la chambre (36, 37) comprenant l'actionneur est prévue sur l'une des zones d'extrémité des lamelles (2 à 5).

4. Volet selon l'une des revendications 1 à 3, **caractérisé en ce que** des goupilles de support (12, 13) sont prévues pour servir de parois transversales (7 à 10) formant des nervures de rigidification des lamelles (2 à 5).

5. Volet selon les revendications 3 et 4, **caractérisé en ce que** chaque lamelle (2 à 5) présente au niveau de la zone entre ses parois transversales (7, 10) d'extrémité au moins une autre paroi transversale (8, 9) présentant une goupille de support (12, 13) et que cette goupille de support (12, 13) supplémentaire est en prise dans une griffe de réception (28) qui est prévue dans une nervure transversale (25, 26) d'une des parties de cadre (23) du cadre de volet (24).

6. Volet selon l'une des revendications 1 à 5, **caractérisé en ce que** la section transversale des lamelles (2 à 5) est recourbée sous la forme d'une faucille.
